# EUROPÄISCHE PATENTSCHRIFT

(11) **EP 3 188 898 B1**
(45) Veröffentlichungstag und Bekanntmachung des Hinweises auf die Patenterteilung: **05.05.2021**
(21) Anmeldenummer: 15738695.4
(22) Anmeldetag: 20.07.2015
(51) Int. Cl.: B29C 70/34, B29C 70/44, B29C 70/88

(54) **VERFAHREN ZUM HERSTELLEN EINES LOKAL VERSTÄRKTEN PROFILBAUTEILS**
METHOD FOR PRODUCING A LOCALLY-REINFORCED PROFILE COMPONENT
PROCÉDÉ DE FABRICATION D'UN ÉLÉMENT DE CONSTRUCTION PROFILÉ RENFORCÉ LOCALEMENT

(30) Priorität: 01.09.2014 DE 102014217372
(43) Veröffentlichungstag der Anmeldung: 12.07.2017
(73) Patentinhaber: Bayerische Motoren Werke Aktiengesellschaft, 80809 München (DE)
(72) Erfinder: STEFANZIOSA, Clemens, 80539 München (DE)
(86) Internationale Anmeldenummer: PCT/EP2015/066536
(87) Internationale Veröffentlichungsnummer: WO 2016/034321

(56) Entgegenhaltungen:
- EP-A1- 2 397 312
- WO-A1-2012/099512
- US-A1- 2006 172 101

## Beschreibung

Die Erfindung betrifft ein Verfahren zum Herstellen eines lokal verstärkten Profilbauteil.

Für die Herstellung von Profilbauteilen aus faserverstärktem Kunststoff ist es beispielsweise bekannt, formgebende Schaumkerne mit Fasermatten aus Glas- oder Kohlefasern zu umwickeln. Das Fasermaterial kann entweder bereits mit einer Matrix vorimprägniert sein oder wird nachfolgend einem Imprägnier-Prozess zugeführt. Hohe Umformgrade lassen sich auf diese Weise jedoch nur schwer realisieren.

Aus der DE 10 2012 018 804 A1 ist daher ein Verfahren zum Herstellen eines Strukturbauteils mit höheren Umformgraden für ein Kraftfahrzeug bekannt, bei dem zunächst ein Faserverbundhalbzeug durch Ummantelung eines Umformschlauches hergestellt und nachfolgend durch Biegen zur Erzielung der hohen Umformgrade umgeformt wird. Ein Ausbeulen während des Biegevorgangs wird durch eine gleichzeitige Beaufschlagung des Umformschlauchs mit einem Gegendruck verhindert.

Das auf diese Weise erzeugte Faserverbundbauteil wird als Endlosbauteil hergestellt und muss auf die gewünschte Länge abgelängt werden. Dadurch weist das Faserverbundbauteil über seine gesamte Länge eine einheitliche Materialart und Materialdicke bzw. Wandstärke auf, die sich durch diejenige Stelle des späteren Bauteils mit der größten zu erwartenden Belastung bestimmt. Weniger belastete Abschnitte weisen folglich die gleiche Dicke auf und sind dementsprechend überdimensioniert.

Aus der EP 2 465 665 A1 ist ein Verfahren bekannt, welches eine lokale Ummantelung eines Strukturbauteils zu dessen gezielter Verstärkung vorsieht. Hierzu wird ein metallisches Hohlprofil lokal mit Preprags mehrmals umwickelt. Jedoch ist der Wickelvorgang aufwendig und erfordert ein anschließendes Aushärten der Matrix.

Beispielsweise ist ein Verfahren zur Herstellung eines lokal verstärkten Profilbauteils aus der US 2006/172101 A1 beziehungsweise ein lokal verstärktes Profilbauteil aus der WO 2012/099512 A1 bekannt.

Aufgabe der Erfindung ist es daher ein Profilbauteil herzustellen, welches die genannten Nachteile zumindest reduziert und dennoch möglichst einfach herstellbar ist.

Diese Aufgabe wird gelöst mit einem Verfahren gemäß Patentanspruch 1.

Demnach wird ein Verfahren zum Herstellen eines lokal verstärkten Profilbauteils mit den folgenden Schritten vorgeschlagen:
a. Bereitstellen eines zu verstärkenden Primärprofils aus faserverstärktem Kunststoff,
b. Bereitstellen eines Sekundärprofils aus Kunststoff zum lokalen Verstärken des Primärprofils,
c. Anordnen des Sekundärprofils auf einer äußeren Oberfläche des Primärprofils zum Erzeugen des Profilbauteils,
d. Erwärmen des Profilbauteils,
e. Stoffschlüssiges Verbinden des Primärprofils und des Sekundärprofils mittels Druckbeaufschlagung einer Außenoberfläche und gleichzeitiger Druckbeaufschlagung einer Innenoberfläche des Profilbauteils mit einem Gegendruck.

Das beschriebene Verfahren bietet den Vorteil, dass sich sowohl das Primärprofil als auch das Sekundärprofil unabhängig von der Herstellung des späteren Profilbauteils herstellen und im Voraus produzieren lassen. So ist es zum Beispiel möglich, die Profile als Meterware herzustellen und auf eine vordefinierte Länge abzulängen.

Das Primärprofil ist hierbei aus faserverstärktem Kunststoff hergestellt und vorzugsweise bereits vollständig ausgehärtet. Als Verstärkungsfasern eignen sich je nach Verwendungszweck Kurz-, Lang- oder Endlosfasern. Selbstverständlich sind auch Mischungen dieser Fasern verwendbar. Die Fasern können Glasfasern, Kohlefasern, Aramidfasern, Naturfasern oder andere zur Verstärkung des Kunststoffs geeignete Fasern sowie Mischungen dieser Fasern umfassen. Das Sekundärprofil umfasst einen nicht-faserverstärkten Kunststoff oder ebenfalls einen faserverstärkten Kunststoff.

Für beide Profile kommt idealerweise thermoplastischer Kunststoff zur Anwendung, wobei das jeweilige Kunststoffmaterial beider Profile voneinander abweichen kann. Es ist also möglich, als Material für das Sekundärprofil das identische Kunststoffmaterial, aber ebenso ein abweichendes Kunststoffmaterial, eine abweichende Faserlänge oder eine abweichende Faserart gegenüber dem Primärprofil zu verwenden. Hierbei sind ausdrücklich alle Kombination der genannten Alternativen möglich. Die Auswahl von unterschiedlichen Verstärkungsfaserarten und/oder Faserlängen bietet die besondere Möglichkeit den Grad der Verstärkung gezielt auf die lokalen Anforderungen anpassen zu können. So kann beispielsweise das Primärprofil mit Langfasern verstärkt werden, wohingegen das Sekundärprofil Endlosfaserverstärkt ausgeführt ist.

In jedem Fall wird das Primärprofil durch Anordnung des Sekundärprofils an der hierfür vorgesehenen Stelle durch eine lokale Wandstärkenaufdickung verstärkt. Das Anordnen kann zunächst ein reines Positionieren des Sekundärprofils an einer Außenoberfläche des Primärprofils umfassen. Das eigentliche Verbinden beider Profile zu dem gemeinsamen Profilbauteil erfolgt anschließend, indem die beiden Profile erwärmt und durch eine auf die Außenoberfläche des Profilbauteils einwirkende Druckbeaufschlagung sowie eine auf die Innenoberfläche einwirkende Druckbeaufschlagung miteinander verpresst werden.

Zusätzliches Material, insbesondere Klebstoff oder dergleichen, ist demzufolge nicht erforderlich. Vielmehr wird das erwärmte Kunststoffmaterial des Primärprofils mit dem erwärmten Kunststoffmaterial des Sekundärprofils stoffschlüssig verpresst. Dies bedeutet, dass sich die Kunststoffmaterialien zumindest teilweise miteinander verbinden, vorzugsweise miteinander verschmelzen, sodass ein einstückiges Profilbauteil entsteht. Das Sekundärprofil ist auf diese Weise materialschlüssig mit dem Primärprofil verbunden und verstärkt dieses zumindest lokal.

Das Profilbauteil weist somit lediglich an der Stelle des Sekundärprofils, vorzugsweise einer Stelle mit einer hohen zu erwartenden Belastung, eine entsprechende Verstärkung auf. Stellen mit geringer zu erwartender Belastung können dagegen ohne zusätzliche Verstärkung lediglich die Wandstärke des Primärprofils aufweisen und somit im Vergleich zu den lokal verstärkten Stellen dünnwandiger ausgeführt sein. Dieser Aufbau ermöglicht eine besonders einfache Herstellung einer bedarfsgerechten lokalen Verstärkung und reduziert gleichzeitig einen Materialeinsatz sowie das gesamte Bauteilgewicht. Es versteht sich, dass mehr als ein Sekundärprofil zur Verstärkung mehrerer Stellen des Primärprofils vorgesehen werden können.

Entsprechend einer bevorzugten Ausführungsform umfasst der Schritt des Erwärmens des Profilbauteils eine gleichzeitige Druckbeaufschlagung der Innenfläche des Profilbauteils mit einem Stützdruck.

Dank des Stützdrucks kann ein Kollabieren, Ausbeulen oder Einbeulen des erwärmten oder des sich erwärmenden Profilbauteils verhindert werden, wenn die Festigkeit bzw. die Steifigkeit des Materials des Profilbauteiles mit zunehmender Erwärmung abnimmt. Der Stützdruck definiert hierzu einen gegenüber einem Außendruck leicht erhöhten Innendruck. Dieser kann zur Erzielung der Stützfunktion in Abhängigkeit von dem eingesetzten Kunststoffmaterial beispielsweise 0,5 bis 5 bar, vorzugsweise ca. 1 bar, betragen.

Des Weiteren kann das Verfahren die Schritte
- eines fluiddichten Verbindens eines ersten Endes des Primärprofils mit einer Fluidzuleitung und/oder
- eines fluiddichten Verbindens eines zweiten Endes des Primärprofils mit einer Fluidableitung umfassen,
um ein Druckfluid in das Primärprofil zum Erzeugen einer Druckbeaufschlagung der Innenoberfläche ein- und/oder auszuleiten.

Demnach kann die Druckbeaufschlagung der Innenoberfläche durch Einleiten eines Druckfluids in das Primärprofil zur Erzeugung des Stützdrucks und/oder des Gegendrucks erfolgen. Als Druckfluide sind beispielsweise Druckluft, Wasser, Öl oder andere Flüssigkeiten geeignet. Diese werden über die Fluidzuleitung in einen durch die Innenoberfläche des Primärprofils definierten Innenraum des Primärprofils eingeleitet. Optional kann an dem zweiten Ende des Primärprofils über die Fluidableitung das Fluid wieder ausgeleitet werden.

Zum Beispiel kann eine Dichtigkeit zwischen dem jeweiligen Ende und der Fluidzuleitung beziehungsweise der Fluidableitung durch einen Matrixüberschuss (Kunststoffüberschuss) des Primärprofils und/oder eines dort angeordneten Sekundärprofils erzielt werden. Der Überschuss kann entweder an einer Innenoberfläche und/oder an einer Außenoberfläche des Primärprofils und/oder des Sekundärprofils vorgesehen sein, so dass eine ausreichende Dichtigkeit realisiert werden kann und somit auf einen Umformschlauch im Inneren des Primärprofils verzichtet werden kann.

Die Fluidzuleitung und/oder die Fluidableitung können jeweils Spannbacken als Kupplungsstücke zum Verbinden mit dem Primärprofil und/oder dem Sekundärprofil aufweisen. Vorzugsweise können die Spannbacken auf der Seite der Fluidzuleitung und/oder der Fluidableitung ein Ventil zum Regeln der Durchströmung umfassen.

Ebenfalls optional kann das Druckfluid temperiert, insbesondere erwärmt oder gekühlt sein, um das Profilbauteil während der Druckbeaufschlagung entsprechend zu erwärmen oder abzukühlen. Insbesondere kann der Schritt des Erwärmens des Profilbauteils durch Verwendung eines entsprechend erwärmten Druckfluids erfolgen.

Vorzugsweise umfasst das Verfahren außerdem einen Schritt des Anordnens des Profilbauteils in einem Formwerkzeug, wobei die Druckbeaufschlagung der Außenfläche des Profilbauteils mittels des Formwerkzeugs erfolgt. Dies bedeutet, dass das Profilbauteil zum Verbinden des Sekundärprofils mit dem Primärprofil in das Formwerkzeug eingelegt und verpresst wird. Der erzeugte Gegendruck kann zum Beispiel kleiner 500 bar, vorzugsweise kleiner 200 bar, besonders bevorzugt kleiner 100 bar, sein.

Hierbei kann das Profilbauteil entweder bereits außerhalb des Formwerkzeugs erwärmt werden und/oder in dem Formwerkzeug selbst. Eine externe Erwärmung ist beispielsweise mittels einer externen Wärmequelle, insbesondere eines kontaktlosen Wärmestrahlers, wie zum Beispiel eines UV- oder Infrarotwärmestrahlers, möglich. Zusätzlich oder alternativ ist die bereits beschriebene Einleitung von erwärmtem Druckfluid zum Erwärmen des Profilbauteils möglich.

Zusätzlich kann die Druckbeaufschlagung der Außenfläche des Profilbauteils mittels des Formwerkzeugs außerdem ein Umformen des Profilbauteils umfassen. Dies bedeutet, dass in dem Formwerkzeug nicht nur ein Verbinden des Primärprofils mit dem Sekundärprofil erfolgt. Vielmehr kann das gesamte Profilbauteil in eine neue Form umgeformt werden. Hierbei kann die Druckbeaufschlagung der Innenoberfläche - wie beschrieben - als Gegendruck gegen ein Ein- oder Ausbeulen des Primärprofils dienen. Es kann demensprechend ein Bauteil mit hohen Umformgraden auf besonders einfache Weise erzeugt werden.

Gemäß bevorzugter Ausführungsformen weist das Sekundärprofil einen C- oder U-förmigen Querschnitt oder einen in einer Umfangsrichtung geschlossenen Querschnitt aufweist. Außerdem kann das Primärprofil einen in einer Umfangsrichtung geschlossenen Querschnitt aufweisen.

Ist der Querschnitt des Sekundärprofils C- oder U-Förmig ausgestaltet, so kann das Sekundärprofil derart auf dem Primärprofil angeordnet werden, dass das Sekundärprofil das Primärprofil mit den Schenkeln der C- oder U-Form zumindest teilweise umgreift. Im Falle eines geschlossenen Querschnitts des Sekundärprofils bildet dieses ein Hohlprofil, wobei das Primärprofil im Inneren des geschlossenen Querschnitts angeordnet ist und von diesem sogar vollständig umgriffen wird. Je nach Ausgestaltung des Querschnitts kann das Sekundärprofil auf das Primärprofil seitlich bzw. quer zu einer Längsrichtung des Primärprofils aufgesteckt oder in dessen Längsrichtung auf das Primärprofil aufgeschoben werden. Vorzugweise ist die Längsrichtung identisch zur Extrusionsrichtung des Profils.

Unter einem in Umfangsrichtung geschlossenen Profil des Primärprofils und/oder des Sekundärprofils ist insbesondere ein Hohlprofil zu verstehen, dessen Wandung in einem Schnitt senkrecht zur Längserstreckung des Profil durchgängig und ohne Unterbrechung ausgeführt ist. Der Querschnitt selbst kann eine beliebige Form aufweisen oder sich nach der Form des späteren Bauteils richten. Bevorzugt sind insbesondere runde, ovale, gebogene und mehreckige Querschnitte. Optional können die Ecken der mehreckigen Querschnitte abgerundet sein. Zum Beispiel können das Primärprofil und das Sekundärprofil die gleiche Querschnittsform aufweisen.

Jedoch ist gemäß einer Ausführungsform ein Innenquerschnitt des Sekundärprofils gleich oder größer als ein Außenquerschnitt des Primärprofils. Es kann damit sichergestellt werden, dass das Sekundärprofil auf das Primärprofil aufgesteckt oder in Längsrichtung aufgeschoben werden kann.

Außerdem kann der Schritt des Anordnens des Sekundärprofils auf dem Primärprofil ein lokales Fixieren des Sekundärprofils an dem Primärprofil umfassen. Dies kann insbesondere mittels eines Verbindungsmittels, eines externen Haltewerkzeugs und/oder einer zumindest lokalen stoffschlüssigen Verbindung erfolgen. Es kann somit verhindert werden, dass sich das Sekundärprofil während der nachfolgenden Arbeitsschritte von dem Primärprofil löst oder sich gegenüber der gewünschten Position verschiebt, bevor beide Profile stoffschlüssig miteinander verbunden werden.

Des Weiteren kann das Verfahren einen Schritt des Anordnens eines Umformschlauchs im Inneren des Primärprofils zur Druckbeaufschlagung der Innenoberfläche mit dem Gegendruck und/oder dem Stützdruck umfassen. Es wird also nicht die Wandung des Primärprofils selbst als Behältnis für das Druckfluid genutzt. Vielmehr wird der Umformschlauch im Inneren des Primärprofils angeordnet und dieser mit dem Druckfluid gefüllt, sodass sich dieser an der Wandung beziehungsweise der Innenoberfläche abstützt. Entsprechend beaufschlagt das Druckfluid über eine Wandung des Umformschlauchs die Innenoberfläche des Primärprofils.

Wie bereits dargelegt, können das Primärprofil und/oder das Sekundärprofil als Meterware hergestellt sein. Dementsprechend umfasst das Verfahren einen Schritt des Schneidens des Primärprofils und/oder des Sekundärprofils auf eine jeweils vordefinierte Länge. Der Vorteil ist eine besonders einfache Herstellung in Verfahren zur kontinuierlichen Halbzeugproduktion, beispielsweise als Strangpressprofil oder mittels Pultrusion, insbesondere als Hohlprofil. Zusätzlich ist die Herstellung der Profile räumlich und zeitlich entkoppelbar von der diskontinuierlichen Verarbeitung zu dem Profilbauteil, so dass eine Takt- und Zykluszeit für das eigentliche Profilbauteil durch die Herstellung der beiden Profile nicht beeinträchtigt wird.

Das Verfahren eignet sich sowohl für konvexe als auch konkave Geometrien. Auch ist eine Weiterverarbeitung mit nachfolgenden Spritzgussprozessen möglich, um beispielsweise Funktionselemente, wie Rippen, Inserts oder Flansche, an dem Profilbauteil anzubringen. Da auf ein Kernsystem verzichtet werden kann, ist es zudem möglich, ein nachträgliches Ausschäumen des Profilbauteils zur Verbesserung von Crasheigenschaften vorzusehen oder die entsprechenden Hohlräume des Profilbauteils zur geschützten Leitungs- und/oder Kabelführung zu nutzen.

Des Weiteren wird ein Profilbauteil vorgeschlagen, wobei das Profilbauteil mittels des beschriebenen Verfahrens hergestellt ist.

Zum Beispiel kann das Profilbauteil ein Längsträger, ein Querträger, ein Sitzquerträger, ein Heckquerträger, ein Frontend-Träger, ein Dachrahmen, ein Motorträger, ein Crashprofil, ein Lenker und/oder ein Stabilisator des Kraftfahrzeugs sein.

Die Erfindung wird nachfolgend anhand eines Ausführungsbeispiels unter Bezugnahme auf die Zeichnungen näher erläutert. Es zeigen:
- Fig. 1:: einen ersten Schritt eines Verfahrens gemäß der Beschreibung,
- Fig. 2: einen zweiten Schritt,
- Fig. 3: einen dritten Schritt,
- Fig. 4: einen vierten Schritt,
- Fig. 5: einen fünften Schritt, und
- Fig. 6: einen sechsten Schritt des Verfahrens.

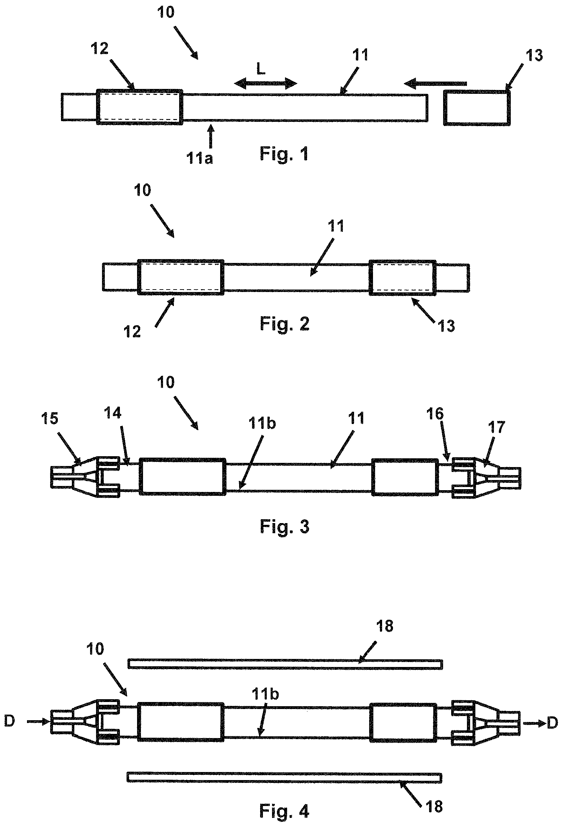

In Fig. 1 ist ein erster Schritt eines Verfahrens zum Herstellen eines lokal verstärkten Profilbauteils 10 dargestellt. Demnach wird zunächst ein zu verstärkenden Primärprofils 11 aus faserverstärktem Kunststoff bereitgestellt. Ebenso werden zwei Sekundärprofile 12,13 aus Kunststoff oder ebenfalls aus faserverstärktem Kunststoff zum lokalen Verstärken des Primärprofils 11 vorgesehen.

Die folgende Beschreibung sieht lediglich zur besseren Anschaulichkeit die Verwendung von zwei Sekundärprofilen zur Verstärkung des Primärprofils an zwei unterschiedlichen Stellen vor. Es versteht sich jedoch, dass das Verfahren ebenso mit lediglich einem Sekundärprofil oder aber mit einer Mehrzahl von Sekundärprofilen analog durchgeführt werden kann.

Beide Sekundärprofile 12,13 werden auf einer äußeren Oberfläche 11a des Primärprofils 11 angeordnet. In Fig. 1 ist das zweite Sekundärprofil 13 bereitgestellt, um in der Längsrichtung L auf das Primärprofil 11 aufgeschoben zu werden. Hierzu ist ein jeweiliger Innenquerschnitt der Sekundärprofile 12,13 gleich oder größer als ein Außenquerschnitt des Primärprofils 11. Die Längsrichtung L erstreckt sich in axialer Erstreckungsrichtung des Primärprofils 11. Die beiden Sekundärprofile 12,13 weisen beispielsweise einen C- oder U-förmigen Querschnitt oder als Hohlprofil einen in einer Umfangsrichtung geschlossenen Querschnitt auf (jeweils nicht dargestellt). Dagegen ist das Primärprofil mit einem in einer Umfangsrichtung geschlossenen Querschnitt als Hohlprofil ausgestaltet (ebenfalls nicht dargestellt).

Fig. 2 zeigt den aufgeschobenen Zustand, in dem beide Sekundärprofile 12,13 auf dem Primärprofil 11 an den jeweils zu verstärkenden Stellen angeordnet sind. Diese Anordnung bildet das weiter zu verarbeitende Profilbauteil 10. Um ein Verrutschen der beiden Sekundärprofile 12,13 gegenüber dem Primärprofil 11 zu verhindern, kann ein nicht dargestelltes lokales Fixieren der Sekundärprofile 12,13 an dem Primärprofil 11 durchgeführt werden. Dies kann insbesondere mittels eines Verbindungsmittels, eines externen Haltewerkzeugs und/oder einer zumindest lokalen stoffschlüssigen Verbindung erfolgen.

Fig. 3 zeigt ein fluiddichten Verbinden eines ersten Endes 14 des Primärprofils 11 mit einer Fluidzuleitung 15 und ein fluiddichtes Verbinden eines zweiten Endes 16 des Primärprofils 11 mit einer Fluidableitung 17. Ein Druckfluid D kann hiermit in das Primärprofil 11 zum Erzeugen einer Druckbeaufschlagung der Innenoberfläche 11b am ersten Ende 14 eingeleitet und am zweiten Ende 16 ausgeleitet werden (vergleiche Fig. 4).

In Fig. 4 ist der nachfolgende Schritt des Erwärmens des Profilbauteils 10 dargestellt. Hierzu können lediglich beispielhaft externe Wärmequellen 18, insbesondere Infrarotlampen, vorgesehen werden. Während des Erwärmens des Profilbauteils 11 kann vorzugsweise eine gleichzeitige Druckbeaufschlagung der Innenfläche 11b des Profilbauteils 11 mit einem Stützdruck erfolgen, indem das Druckfluid D in das Primärprofil 11 eingeleitet wird. Über eine optionale Erwärmung des eingeleiteten Druckfluids D kann die Erwärmung des Profilbauteils 10 alternativ oder zusätzlich durchgeführt werden.

Anschließend wird das erwärmte Profilbauteil 10 in ein Formwerkzeug 20 mit einem Oberwerkzeug und einem relativ hierzu bewegbaren Unterwerkzeug eingelegt, wobei die Druckbeaufschlagung der Außenfläche des Profilbauteils mittels des Formwerkzeugs erfolgt. Hierzu wird das Formwerkzeug 20 nach Einlegen des Profilbauteils 10 geschlossen und dieses verpresst.

Gemäß einer alternativen Abfolge (nicht dargestellt), kann das Profilbauteil 10 zunächst in das Formwerkzeug 20 eingelegt und dort ebenfalls mittels einer externen Wärmequelle, einer in das Formwerkzeug integrierten Wärmequelle oder dem gegebenenfalls erwärmten Druckfluid D erwärmt werden.

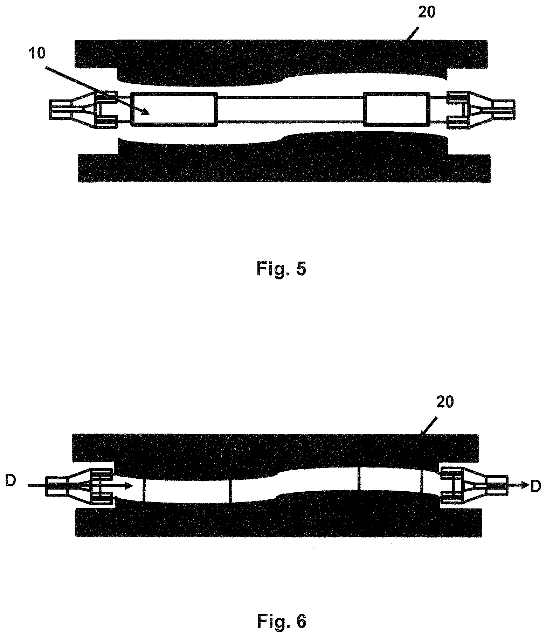

Wie in Fig. 6 anhand des geschlossenen Formwerkzeugs 20 dargestellt, erfolgt hierbei ein stoffschlüssiges Verbinden des Primärprofils 11 und der beiden Sekundärprofile 12,13 mittels einer Druckbeaufschlagung einer Außenoberfläche und gleichzeitiger Druckbeaufschlagung einer Innenoberfläche des Profilbauteils 10 mit einem Gegendruck. Zusätzlich ist das Formwerkzeug 20 derart ausgestaltet, dass die Druckbeaufschlagung der Außenfläche des Profilbauteils 10 mittels des Formwerkzeugs 20 außerdem ein Umformen des gesamten Profilbauteils 11 bewirkt. Die Innenoberfläche des Profilbauteils 10 wird durch die Innenoberfläche 11b des Primärprofils 11 gebildet. Die Außenoberfläche des Profilbauteils 10 wird dagegen sowohl von der Außenoberfläche 11a sowie an den lokal verstärkten Stellen durch Außenoberflächen der Sekundärprofile 12,13 definiert.

Es kann somit in eine erforderliche Bauteilform gebracht werden. Zum Beispiel kann das Profilbauteil 10 ein Längsträger, ein Querträger, ein Frontend-Träger, ein Dachrahmen, ein Lenker und/oder ein Stabilisator des Kraftfahrzeugs sein.

## Patentansprüche

1. Verfahren zum Herstellen eines lokal verstärkten Profilbauteils mit den folgenden Schritten:
a. Bereitstellen eines zu verstärkenden Primärprofils (11) aus faserverstärktem Kunststoff,
b. Bereitstellen eines Sekundärprofils (12,13) aus Kunststoff zum lokalen Verstärken des Primärprofils (11),
c. Anordnen des Sekundärprofils (12,13) auf einer äußeren Oberfläche (11a) des Primärprofils (11) zum Erzeugen des Profilbauteils (10),
d. Erwärmen des Profilbauteils (10), und
e. Stoffschlüssiges Verbinden des Primärprofils (11) und des Sekundärprofils (12,13) mittels Druckbeaufschlagung einer Au-. ßenoberfläche und gleichzeitiger Druckbeaufschlagung einer Innenoberfläche des Profilbauteils (10) mit einem Gegendruck.

2. Verfahren nach Anspruch 1, wobei der Schritt des Erwärmens des Profilbauteils (10) eine gleichzeitige Druckbeaufschlagung der Innenfläche des Profilbauteils (10) mit einem Stützdruck umfasst.

3. Verfahren nach Anspruch 1 oder 2, wobei das Verfahren die Schritte
- eines fluiddichten Verbindens eines ersten Endes (14) des Primärprofils (11) mit einer Fluidzuleitung (15) und/oder
- eines fluiddichten Verbindens eines zweiten Endes (16) des Primärprofils (11) mit einer Fluidableitung (17) umfasst,
um ein Druckfluid in das Primärprofil (11) zum Erzeugen einer Druckbeaufschlagung der Innenoberfläche (11b) ein- und/oder auszuleiten.

4. Verfahren nach Anspruch 3, wobei eine Dichtigkeit zwischen dem ersten Ende und der Fluidzuleitung und/oder zwischen dem zweiten Ende und der Fluidableitung durch einen Matrixüberschuss des Primärprofils an der Innenoberfläche (11b) und/oder an der Außenoberfläche (11a) des Primärprofils (11) erzielt werden.

5. Verfahren nach einem der vorhergehenden Ansprüche, wobei das Verfahren einen Schritt des Anordnens des Profilbauteils (10) in einem Formwerkzeug (20) umfasst, wobei die Druckbeaufschlagung der Außenfläche des Profilbauteils (20) mittels des Formwerkzeugs (20) erfolgt.

6. Verfahren nach Anspruch 5, wobei die Druckbeaufschlagung der Außenfläche des Profilbauteils (10) mittels des Formwerkzeugs (20) außerdem ein Umformen des Profilbauteils (10) umfasst.

7. Verfahren nach einem der vorhergehenden Ansprüche, wobei das Sekundärprofil (12,13) einen C- oder U-förmigen Querschnitt oder einen in einer Umfangsrichtung geschlossenen Querschnitt aufweist, und das Primärprofil (11) einen in einer Umfangsrichtung geschlossenen Querschnitt aufweist.

8. Verfahren nach einem der vorhergehenden Ansprüche, wobei ein Innenquerschnitt des Sekundärprofils (12,13) gleich oder größer als ein Außenquerschnitt des Primärprofils (11) ist.

9. Verfahren nach einem der vorhergehenden Ansprüche, wobei der Schritt des Anordnens des Sekundärprofils (12,13) auf dem Primärprofil (11) ein lokales Fixieren des Sekundärprofils (12,13) an dem Primärprofil (11) umfasst, insbesondere mittels eines Verbindungsmittels, eines externen Haltewerkzeugs und/oder einer zumindest lokalen stoffschlüssigen Verbindung.

10. Verfahren nach einem der vorhergehenden Ansprüche, wobei das Verfahren einen Schritt des Anordnens eines Umformschlauchs im Inneren des Primärprofils (11) zur Druckbeaufschlagung der Innenoberfläche mit dem Gegendruck und/oder dem Stützdruck umfasst.

11. Verfahren nach einem der vorhergehenden Ansprüche, wobei das Primärprofil (11) und/oder das Sekundärprofil (12,13) als Meterware hergestellt sind und das Verfahren einen Schritt des Schneidens des Primärprofils (11) und/oder des Sekundärprofils (12,13) auf eine jeweils vordefinierte Länge umfasst.

12. Verfahren nach einem der vorhergehenden Patentansprüche 1 bis 11, **dadurch gekennzeichnet, dass** das Profilbauteil (10) ein Längsträger, ein Querträger, ein Frontend-Träger, ein Dachrahmen, ein Motorträger, ein Crashprofil, ein Lenker und/oder ein Stabilisator des Kraftfahrzeugs ist.

## Claims

1. Method for producing a locally reinforced profile component, having the following steps:
a. providing a primary profile (11) to be reinforced, which is composed of fibre-reinforced plastic,
b. providing a secondary profile (12, 13), which is composed of plastic, for locally reinforcing the primary profile (11),
c. arranging the secondary profile (12, 13) on an external surface (11a) of the primary profile (11) in order to generate the profile component (10),
d. warming the profile component (10), and
e. cohesively connecting the primary profile (11) and the secondary profile (12, 13) by exertion of pressure on an external surface and simultaneous exertion of an opposing pressure on an internal surface of the profile component (10) .

2. Method according to Claim 1, wherein the step of warming the profile component (10) comprises simultaneous exertion of a supporting pressure on the internal surface of the profile component (10).

3. Method according to Claim 1 or 2, wherein the method comprises the steps
- of fluid-tight connection of a first end (14) of the primary profile (11) to a fluid feed line (15) and/or
- of fluid-tight connection of a second end (16) of the primary profile (11) to a fluid discharge line (17),
in order to conduct a pressurized fluid into and/or out of the primary profile (11) for the purposes of effecting an exertion of pressure on the internal surface (11b).

4. Method according to Claim 3, wherein leak-tightness between the first end and the fluid feed line and/or between the second end and the fluid discharge line is achieved by means of an excess of matrix of the primary profile at the internal surface (11b) and/or at the external surface (11a) of the primary profile (11) .

5. Method according to any of the preceding claims, wherein the method comprises a step of arranging the profile component (10) in a moulding tool (20), wherein the exertion of pressure on the external surface of the profile component (20) is performed by means of the moulding tool (20).

6. Method according to Claim 5, wherein the exertion of pressure on the external surface of the profile component (10) by means of the moulding tool (20) furthermore comprises a deformation of the profile component (10).

7. Method according to any of the preceding claims, wherein the secondary profile (12, 13) has a C-shaped or U-shaped cross section or a cross section which is closed in a circumferential direction, and the primary profile (11) has a cross section which is closed in a circumferential direction.

8. Method according to any of the preceding claims, wherein an internal cross section of the secondary profile (12, 13) is equal to or larger than an external cross section of the primary profile (11).

9. Method according to any of the preceding claims, wherein the step of arranging the secondary profile (12, 13) on the primary profile (11) comprises locally fixing the secondary profile (12, 13) on the primary profile (11), in particular by way of a connecting means, an external holding tool and/or an at least local cohesive connection.

10. Method according to any of the preceding claims, wherein the method comprises a step of arranging a deformable hose in the interior of the primary profile (11) for the purposes of exerting the opposing pressure and/or the supporting pressure on the internal surface.

11. Method according to any of the preceding claims, wherein the primary profile (11) and/or the secondary profile (12, 13) are produced as piece goods, and the method comprises a step of cutting the primary profile (11) and/or the secondary profile (12, 13) to a respectively predefined length.

12. Method according to any of the preceding Patent Claims 1 to 11, **characterized in that** the profile component (10) is a longitudinal member, a transverse member, a front-end member, a roof frame, an engine support, a crash profile, a link and/or a stabilizer of the motor vehicle.

## Revendications

1. Procédé de fabrication d'un élément de construction profilé renforcé localement, comprenant les étapes suivantes consistant à :
a. fournir un profilé primaire (11) à renforcer, en matière plastique renforcée par des fibres,
b. fournir un profilé secondaire (12, 13) en matière plastique pour le renforcement local du profilé primaire (11),
c. disposer le profilé secondaire (12, 13) sur une surface extérieure (11a) du profilé primaire (11) pour produire l'élément de construction profilé (10),
d. chauffer l'élément de construction profilé (10), et
e. relier par liaison de matière le profilé primaire (11) et le profilé secondaire (12, 13) au moyen d'une sollicitation par pression d'une surface extérieure et par une sollicitation par pression simultanée d'une surface intérieure de l'élément de construction profilé (10) avec une contre-pression.

2. Procédé selon la revendication 1, dans lequel l'étape du chauffage de l'élément de construction profilé (10) comprend une sollicitation par pression simultanée de la surface intérieure de l'élément de construction profilé (10) avec une pression d'appoint.

3. Procédé selon la revendication 1 ou 2, dans lequel le procédé comprend les étapes consistant à
- raccorder de manière étanche aux fluides une première extrémité (14) du profilé primaire (11) à une conduite d'alimentation en fluide (15), et/ou
- raccorder de manière étanche aux fluides une deuxième extrémité (16) du profilé primaire (11) à une conduite d'écoulement de fluide (17)
afin d'introduire et/ou d'évacuer un fluide sous pression dans le profilé primaire (11) pour générer une sollicitation par pression de la surface intérieure (11b) .

4. Procédé selon la revendication 3, dans lequel une étanchéité entre la première extrémité et la conduite d'alimentation en fluide et/ou entre la deuxième extrémité et la conduite d'écoulement de fluide est obtenue par un excédent de matrice du profilé primaire à la surface intérieure (11b) et/ou à la surface extérieure (11a) du profilé primaire (11).

5. Procédé selon l'une quelconque des revendications précédentes, dans lequel le procédé comprend une étape consistant à disposer l'élément de construction profilé (10) dans un outil de moulage (20), la sollicitation par pression de la surface extérieure de l'élément de construction profilé (20) étant effectuée au moyen de l'outil de moulage (20) .

6. Procédé selon la revendication 5, dans lequel la sollicitation par pression de la surface extérieure de l'élément de construction profilé (10) au moyen de l'outil de moulage (20) comprend en outre un formage de l'élément de construction profilé (10).

7. Procédé selon l'une quelconque des revendications précédentes, dans lequel le profilé secondaire (12, 13) présente une section transversale en forme de C ou de U ou une section transversale fermée dans une direction circonférentielle, et le profilé primaire (11) présente une section transversale fermée dans une direction circonférentielle.

8. Procédé selon l'une quelconque des revendications précédentes, dans lequel une section transversale intérieure du profilé secondaire (12, 13) est égale ou supérieure à une section transversale extérieure du profilé primaire (11).

9. Procédé selon l'une quelconque des revendications précédentes, dans lequel l'étape consistant à disposer le profilé secondaire (12, 13) sur le profilé primaire (11) comprend une fixation locale du profilé secondaire (12, 13) au profilé primaire (11), en particulier à l'aide d'un moyen de raccordement, d'un outil de retenue externe et/ou d'un assemblage par liaison de matière, au moins local.

10. Procédé selon l'une quelconque des revendications précédentes, dans lequel le procédé comprend une étape consistant à disposer un tuyau de formage à l'intérieur du profilé primaire (11) pour la sollicitation par pression de la surface intérieure par la contre-pression et/ou la pression d'appoint.

11. Procédé selon l'une quelconque des revendications précédentes, dans lequel le profilé primaire (11) et/ou le profilé secondaire (12, 13) sont fabriqués au mètre, et le procédé comprend une étape consistant à découper le profilé primaire (11) et/ou le profilé secondaire (12, 13) à une longueur prédéfinie respectivement.

12. Procédé selon l'une quelconque des revendications précédentes 1 à 11, **caractérisé en ce que** l'élément de construction profilé (10) est un longeron, une traverse, une structure pour faces avant, un cadre de toit, un support de moteur, un profilé anticollision, un bras oscillant transversal et/ou une barre antiroulis du véhicule automobile.
